# EUROPEAN PATENT APPLICATION

(11) **EP 0 625 754 A1**
(43) Date of publication of application: **23.11.1994**
(21) Application number: 94301599.0
(22) Date of filing: 07.03.1994
(51) Int. Cl.: G06F 15/16

(54) **Resource allocation in a computer system**

(30) Priority: 19.05.1993 GB 9310371
(71) Applicant: INTERNATIONAL COMPUTERS LIMITED, Putney, London, SW15 1SW (GB)
(72) Inventor: Daws, Eric James, Alsager, Stoke-On-Trent (GB)
(74) Representative: Guyatt, Derek Charles

(57) **Abstract**

A mechanism for allocation of hardware resources of a computer system to an add-on sub-system. The mechanism includes means for automatically checking whether the hardware resources required by the sub-system are available within the computer system. If the required hardware resources are not available, alternative hardware resources are automatically allocated to the sub-system, and a report is generated.

## Description

### Background to the Invention

This invention relates to computer systems and more particularly is concerned with allocation of the hardware resources of such a system to add-on sub-systems. These hardware resources may include, for example, interrupt vectors, DMA channels, I/O address ranges and memory address ranges. The add-on sub-systems may, for example, be add-on modules such as LAN or bus interface cards and their associated driver software modules.

Resource allocation causes problems of administration and control: how to ensure that any given set of add-on sub-systems are assigned appropriate hardware resources. Conventionally, resource allocation is the responsibility of the user when installing a new sub-system. If there is a clash of resource usage, the user must draw up tables showing what resources have already been allocated to existing installed sub-systems and then choose an alternative resource which is both unused and useable by the new sub-system hardware and software.

A problem with this is that it requires expert system administration, and is susceptible to human error. The object of the present invention is to overcome or reduce these problems.

### Summary of the Invention

According to the invention there is provided a computer system comprising means for installing a sub-system, including means for automatically checking whether hardware resources required by the sub-system are available within the computer system and, if required hardware resources are not available, for automatically allocating alternative hardware resources to the sub-system.

As will be shown, the invention overcomes the above-mentioned problems by automating the choice of alternative resources. This technique is referred to herein as dynamic resource allocation (DRA).

### Brief Description of the Drawings

Figure 1 is a block diagram of a computer system embodying the invention.

Figure 2 is a schematic block diagram showing the mechanism for installing a sub-system.

### Description of an Embodiment of the Invention

One computer system embodying the invention will now be described by way of example with reference to the accompanying drawings.

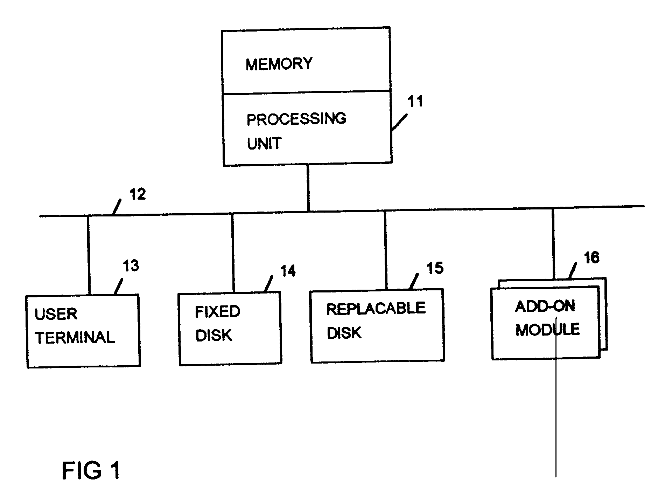

Referring to Figure 1, the computer system comprises a processing unit 10 having a main memory 11. The processing unit 10 is connected to an I/O (input/output) bus 12, which is in turn connected to a number of units including a user terminal 13, fixed disk unit 14, and replaceable disk unit 15. A number of add-on hardware modules 16 may also be connected to the system by way of the I/O bus. The I/O bus may be standard, conventional bus comprising data, address, and control lines.

The computer system may for example be an ICL DRS3000 computer running under the DRS/NX operating system, supplied by International Computers Limited. DRS/NX is a value-added version of the UNIX SVR4.2 operating system. UNIX is a registered trade mark of UNIX System Laboratories Inc.

In order to install a new sub-system, comprising an add-on hardware module and its associated driver software, the following steps are performed. First, the driver software is installed, using an installation mechanism to be described below. As will be described, the installation mechanism automatically allocates hardware resources to the new sub-system, resolving any conflicts that may arise. The installation mechanism then generates a report, referred to as the DRA User Report, which lists the resources that have been allocated to the new sub-system, and indicates the actions that are required to configure the add-on hardware module, such as any jumper or switch settings. It should be noted that the driver software must be installed before any associated hardware. This ensures that the hardware can be post-configured to match its actual hardware resource usage to those allocated to software by the installation mechanism. This is in contrast to the conventional situation where a user is likely to install the hardware before the software and possibly end up with a non-booting or severely degraded system.

### Driver Software Package

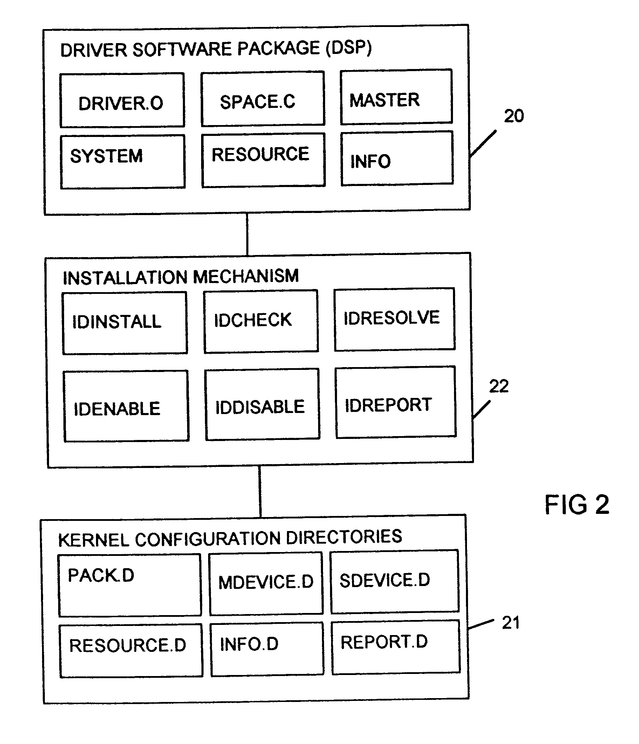

Referring to Figure 2, the software driver module is supplied to the system as a driver software package (DSP) 20, for example on a floppy disk. The DSP comprises a set of files named Driver.o, Space.c, Master, System, Resource, and Info. The first four of these are standard files, and contain information necessary to install the driver. In particular, the System file contains a specification of all the hardware system resources required by the sub-system. It also contains an Inclusion flag, which is set to "Y" or "N": "Y" indicates that this particular module should be included in any subsequent kernel build; "N" indicates that it should not be included. Normally, the inclusion flag is pre-set to "Y" in the DSP.

The Resource file contains a list of alternative hardware resources that can be used by the sub-system software and hardware. The file is in the form of a list of <name>=<value> environment variables, the syntax of which follows normal UNIX shell script convention; i.e. single values may be specified with or without quotes, while multiple values must be enclosed by double quotes and separated by white space. The variables in the Resource file are as follows:
DEVICE=<driver short name>
DESC=<driver / hardware description>
ARCH=<hardware type>
IVEC=<interrupt vector list>
SHAR=<interrupt share flag>
IPL=<interrupt priority level>
IOADDR=<I/O space list>
MEMADDR=<memory space list>
DMA=<DMA channel list>
where:
DEVICE is the short name of the sub-system.
DESC is a longer sub-system description for use in the DRA user report.
ARCH specifies the hardware architecture of the associated add-on card, and has one of the following values:
ISA - Industry Standard Architecture
EISA - Extended Industry Standard Architecture <null>
IVEC specifies the interrupt vector for the sub-system, as a single number or set of alternative numbers. DRS/NX supports vectors 1 to 15 inclusive. IVEC=0 indicates that the sub-system does not require an interrupt vector.
SHAR is an interrupt share flag, and is not currently used.

IPL is a system ipl level for the sub-system interrupt handler, and is not currently used.

IOADDR specifies the I/O Address space for the sub-system, in the form of a range or multiple alternative ranges. DRS/NX supports addresses 0x1 to 0x3fff inclusive. IOADDR=0-0 indicates that the sub-system does not require I/O address space.

MEMADDR specifies the Memory Address space for the sub-system, in the form of a range or multiple alternative ranges. DRS/NX supports addresses in the range Oxa0000 to 0xfbfff. MEMADDR=0-0 indicates that the sub-system does not require memory address space.

DMA specifies the DMA channel for the sub-system as a single number or multiple alternative numbers. DRS/NX supports DMA channels 0 to 7 inclusive. DMA=-1 indicates that the sub-system does not use a DMA channel.

The Info file is optional and its contents are effectively free format. It provides information to assist the user during hardware configuration. For example, the file could contain textual instructions or diagrams showing jumper/switch settings for each alternative resource setting.

### Kernel Configuration Directories

The configurations of all sub-systems that have been installed in the system are stored in a set of kernel configuration directories 21. These include the following directories:
/etc/conf/pack.d: this contains copies of all installed Driver.o files (and Space.c files, if supplied in the DSP).
/etc/conf/mdevice.d: this contains copies of all installed Master files.
/etc/conf/sdevice.d: this contains copies of all installed System files.
/etc/conf/resource.d: this contains copies of all installed Resource files.
/etc/conf/info.d: this contains copies of all installed Info files (where these files have been provided).
/var/dra/report.d: this contains copies of all DRA Report files that have been generated.

### Installation Mechanism

Referring still to Figure 2, the mechanism for installing a new sub-system comprises a number of utilities 22 as follows: idinstall, idcheck, idresolve, idenable, iddisable, and idreport.

### Idinstall

Idinstall is used to install a DSP (driver software package) fileset into the kernel build directory. It takes the set of DSP files, converts them from SVR4 format to SVR4.2 format, and finally plants them into the target kernel configuration directories, renaming the files as required. Idinstall is a standard UNIX SVR4.2 utility, with the following modifications:
1) Idinstall is modified to install the files Resource and Info, in addition to the standard DSP files.
   Specifically, the Resource file is transferred to /etc/conf/resource.d, and the Info file is transferred to /etc/conf/info.d.
2) The final action for idinstall is to fork and exec the idresolve utility (see below).

### Idcheck

This is a standard UNIX SVR4.2 utility, and is used to check the availability of a particular type and instance of a hardware resource.

### Idresolve

Idresolve is invoked either from within idinstall or from the command line. It identifies, resolves and reports any resource conflicts encountered during sub-system installation.

The operation of idresolve is as follows:

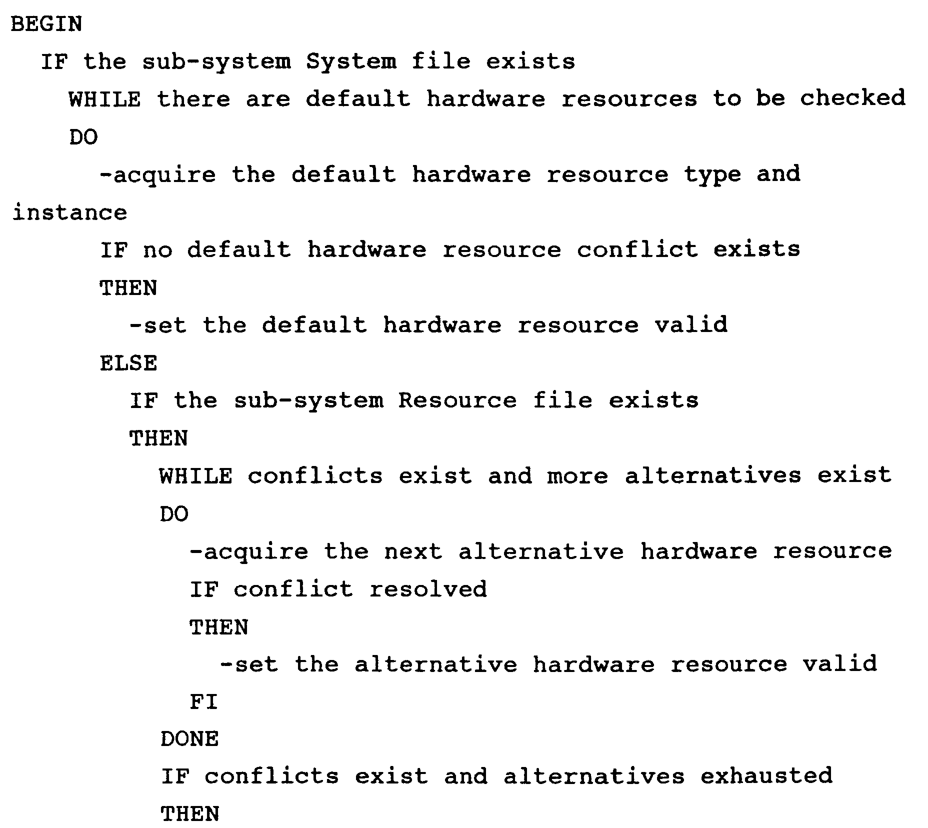

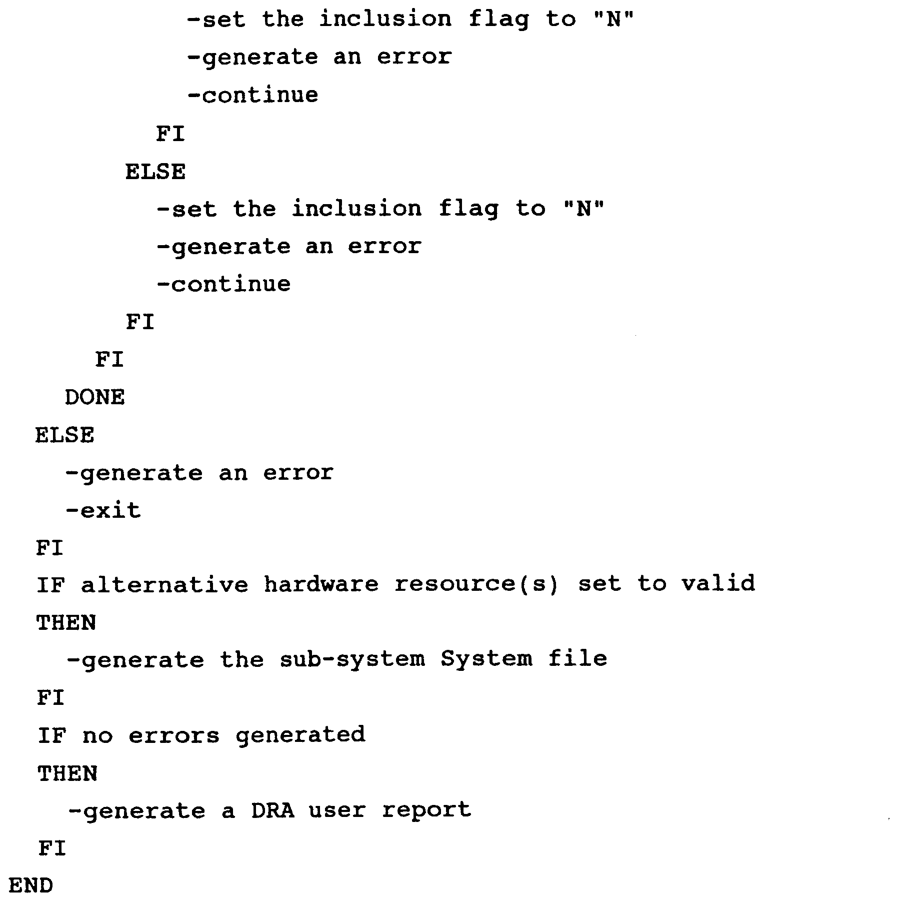

Thus, it can be seen that idresolve acquires the default resource types and instances from the System file of the sub-system being installed. If no conflicts exist for the defaults then idresolve simply generates a DRA user report. If a conflict is identified then idresolve will attempt to read the sub-system's Resource file. If this file does not exist, idresolve excludes the sub-system from a subsequent kernel build, by setting the inclusion flag of the System file entry to "N". If the Resource file does exist then idresolve tries each listed alternative resource in turn until either the conflict is resolved or the list is exhausted. In the latter case the sub-system is again excluded from a subsequent kernel build. In the former case, idresolve re-constructs the sub-system's System file using the allocated alternative(s). Finally, idresolve will generate the DRA user report.

### Idenable

Idenable enables a specified sub-system to be included in a subsequent kernel build. It runs idresolve, to ensure that no conflicts exist following the enable.

The operation of idenable is as follows:

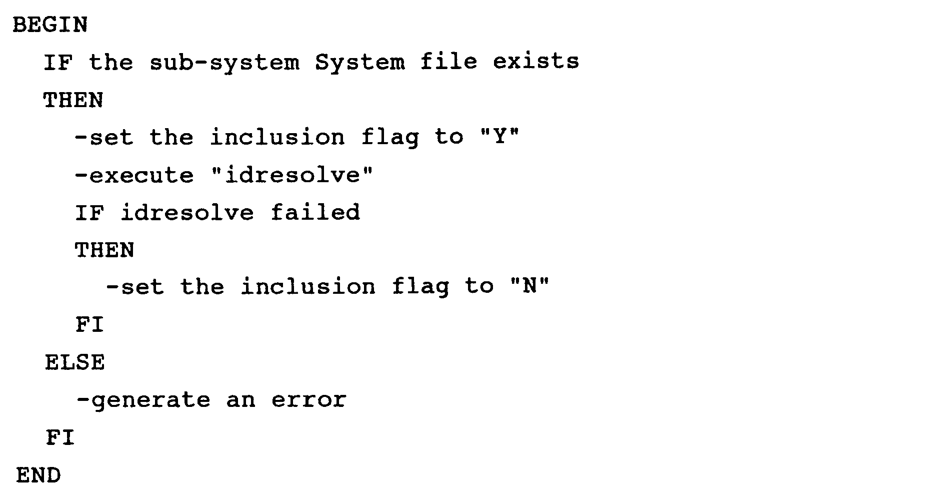

### Iddisable

Iddisable disables a particular sub-system so that it is not included in a subsequent kernel build.

The operation of iddisable is as follows:

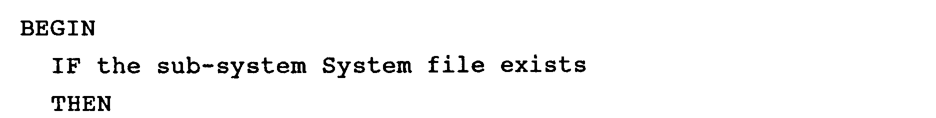

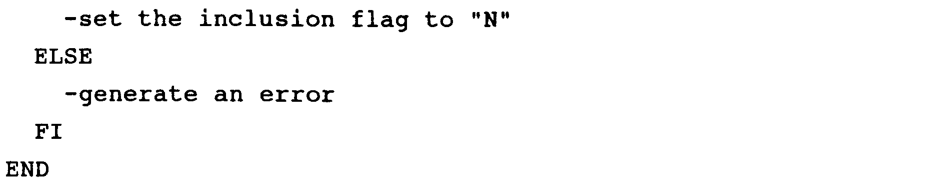

### Idreport

Idreport generates or regenerates a DRA user report. The report shows the current allocation of resources for the host system. A call to this utility includes the name of the sub-system for which the report is to be generated. The call may also specify an -f option, which selects a full system report.

Idreport performs the following processing:

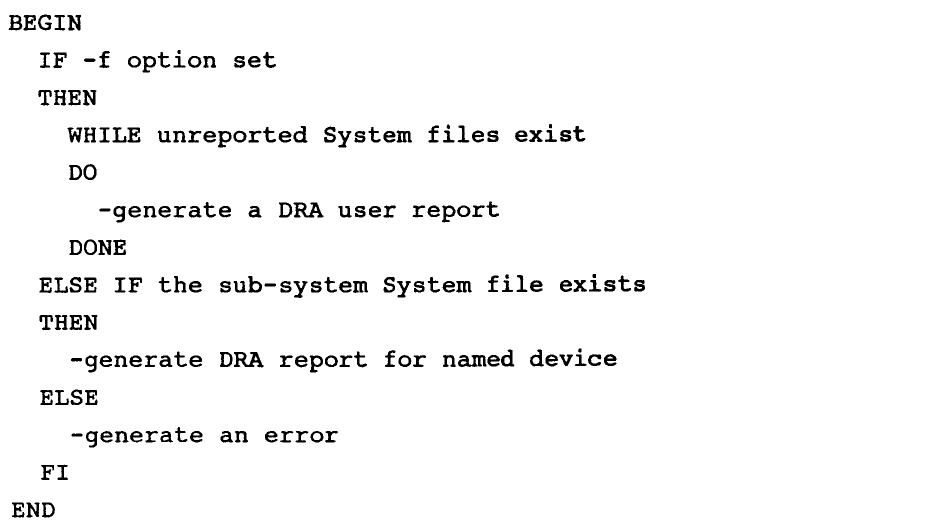

### DRA User Report

A DRA user report file is generated upon successful completion of idresolve processing or idreport processing. It contains details of actual resources allocated to a specific sub-system. The report output is structured so that it provides both user (customer) information and also a data stream which can be piped to other commands. All data fields are separated by spaces (not tabs).

As an example, consider the installation of a fictitious add-on module called "Hypernet", and its associated driver software. It is assumed that "Hypernet" comprises an ISA card with a default interrupt vector of 15 with two alternatives of 14 and 12, a default I/O range of 170-178 with two alternative ranges of 1F0-1F8 and 330-338, and a default Memory range of C8000-C9FFF and one alternative range of D8000-D9FFF. The card does not use a DMA channel.

The Resource file for the driver software would be as follows:
DEVICE=HYPERLAN
DESC="Hypernet HN52.16 card"
ARCH=ISA
IVEC="15 14 12"
SHAR=1
IPL=5
IOADDR="170-178 1F0-1F8 330-338"
MEMADDR="C8000-C9FFF D8000-D9FFF"
DMA="-1"

The following shows a typical DRA user report that might be generated after running idinstall to install the driver software:

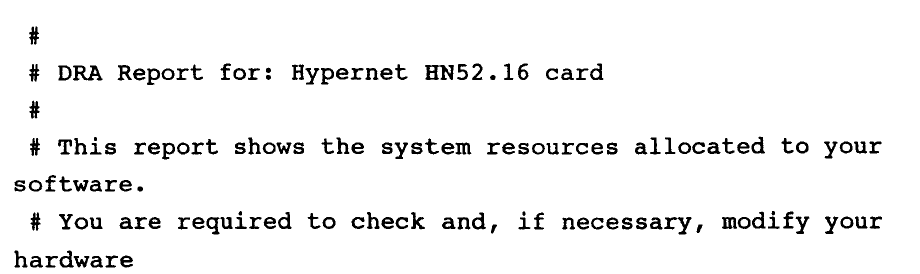

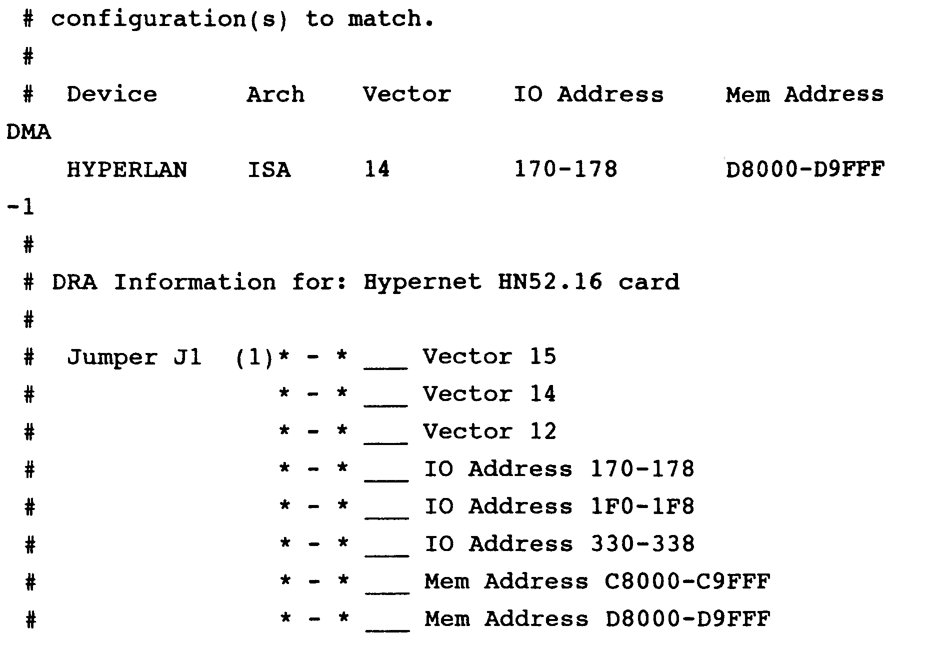

The report lists the resources allocated to the "Hypernet" sub-system, and contains a diagram showing the locations of the jumpers that have to be set on the "Hypernet" card by the user in order to configure it.

### Some Possible Modifications

In a modification of the system, the installation mechanism may be arranged to inspect the ARCH variable of the Resource file. If ARCH=EISA (indicating that the add-on hardware module is an EISA card), the installation mechanism automatically proceeds to program the card on-the-fly to achieve the required hardware resource allocation, thus removing the need for the user to perform any configuration of the card.

In another possible modification, if the idresolve utility cannot find a suitable hardware resource to allocate to the new sub-system, it may then attempt to re-allocate the resources already allocated to previously installed sub-systems, in order to try to find a distribution of resources that does not cause any conflicts.

## Claims

1. A computer system comprising means for installing a sub-system, including means for automatically checking whether hardware resources required by the sub-system are available within the computer system and, if required hardware resources are not available, for automatically allocating alternative hardware resources to the sub-system.

2. A system according to Claim 1 further including means for generating a report indicating the resources that have been allocated to a sub-system and indicating hardware configuration actions that are required in order to allow the sub-system to use the resource.

3. A system according to either preceding claim wherein said hardware resources include at least some of the following: interrupt vector bits, DMA channel number, I/O address range, and memory address range.
